(19) Europäisches Patentamt / European Patent Office / Office européen des brevets

(11) **EP 2 689 206 B1**

(12) **EUROPEAN PATENT SPECIFICATION**

(45) Date of publication and mention
of the grant of the patent:
**17.08.2016 Bulletin 2016/33**

(21) Application number: **12717862.2**

(22) Date of filing: **23.03.2012**

(51) Int Cl.:
**F28D 9/00** *(2006.01)*    **F28F 3/12** *(2006.01)*

(86) International application number:
**PCT/IB2012/051395**

(87) International publication number:
**WO 2012/127452 (27.09.2012 Gazette 2012/39)**

(54) **HEAT EXCHANGER**

WÄRMETAUSCHER

ÉCHANGEUR THERMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2011 IT MI20110465**

(43) Date of publication of application:
**29.01.2014 Bulletin 2014/05**

(73) Proprietor: **Innova S.r.l.
38085 Pieve Di Bono (TN) (IT)**

(72) Inventor: **RIZZONELLI, Rosella
I-38081 Bondo (tn) (IT)**

(74) Representative: **Cantaluppi, Stefano
Cantaluppi & Partners S.r.l.
Piazzetta Cappellato Pedrocchi, 18
35122 Padova (IT)**

(56) References cited:
**GB-A- 2 416 829        US-A1- 2010 258 062
US-A1- 2011 024 080**

EP 2 689 206 B1

**Description**

The present invention relates to a heat exchanger device according to the preamble of claim 1. The invention can be used, for example, to permit an exchange of heat between discharged liquids or waste water, having a first temperature, and liquids arriving from a supply line, for example domestic hot water for supplying users, which are at a second temperature lower than the first, and which can be appropriately pre-heated before their use. The invention is particularly applicable to the recovery of heat from discharged water from washbasins, showers, bath tubs, bidets or the like, and to the use of this heat for pre-heating domestic hot water from the water distribution system before its use.

It is known that domestic hot water is used in domestic, residential, hotel or commercial premises for numerous purposes, and that for some of these purposes the domestic hot water is usually heated by known means such as boilers, water heaters, photovoltaic systems, or other systems. For example, domestic hot water can be used for personal hygiene (in washbasins, showers, bidets, bath tubs, or the like), for washing articles such as garments or tableware (in single or double sinks), or the like. It is also known that used hot water is normally discharged into the waste water system, flowing subsequently into sewerage systems or in other ways into the external environment, causing a loss of the thermal energy imparted to the water and thermal pollution of the environment.

There are known heat exchangers which are used, in industrial environments for example, to recover heat from waste water, these exchangers being essentially divided into:

- parallel plate exchangers, in which the fluids whose heat is to be exchanged flow in countercurrent, divided by suitable plates;
- tube bundle exchangers, in which a fluid flows in a tube or in a bundle of tubes, and the other fluid flows outside these tubes, in an outer casing;
- coil exchangers, in which a fluid flows in a tube of spiral shape, or in a series of such tubes, contained in a reservoir in which the other fluid is located.

All the known types of exchangers described above have drawbacks, particular in respect of the tendency of these devices to become fouled rapidly owing to the presence in the waste water of fouling physical bodies, such as hair, paper or cardboard objects, food residues, or the like. Chemical fouling substances such as surfactants, oils and fatty substances in general, and the like are also present in waste water.

The aforementioned bodies and substances cause rapid fouling of known exchangers, with the highly negative effect of impeding the correct outflow of waste water and considerably diminishing the heat exchange.

This is because the configurations of known exchangers have been designed to maximize the heat exchange between the liquids, and therefore have numerous bends and shapes which tend to retain the fouling substances present in waste water. The known devices therefore require frequent maintenance to prevent their obstruction and to maintain adequate heat exchange efficiency. It is evident that maintenance operations become particularly difficult in the case of large-scale application of known exchangers to heat recovery from waste water, and in many cases lead to serious problems in the operation of plumbing systems because of the obstruction of the outlets. A further problem of existing heat exchangers is their considerable overall dimensions which make them difficult to use, especially in cases in which one of the two fluids is not pressurized, as in the case of domestic hot water.

It is clear from the above discussion that known systems for exchanging heat between waste water and clean feedwater are not suitable for general use but are intended for industrial applications, where frequent maintenance operations can be arranged.

A heat exchanger according to the preamble of claim 1 and intended for use in domestic hot water systems is described in US2010/0024080. In the examples provided in Figures 15 to 17, the heat exchanger comprises a tube bundle with tubes arranged in parallel independent coils which depart from and converge in corresponding manifolds.

The manifolds, in turn, are connected to the domestic hot water system. The coils are housed in a casing into which the waste water is introduced in such a way that the tube bundle is immersed in the outflow. Although the proposed system is useful for the purpose of improving the fit of the exchanger in the intended environments, it is unable to provide an optimal flow of grey waste water, because it forms multiple "traps" in which the diluted dirt in the waste water tends to accumulate, thus drastically reducing the heat exchange efficiency over time. Indeed, it should be borne in mind that, when the exchanger has been installed, especially if embedded in walls or floors, it may become completely inaccessible or at least difficult to access for any necessary maintenance operations.

Other exchangers are described in GB2416829 and US2010/258062. However, these documents are limited to general teachings concerning possible exchanger, and are completely unsuitable to high-efficiency practical application. The critical comments made about the preceding document are equally applicable to these further two examples of the prior art.

The main object of the present invention is to resolve one or more of the problems encountered in the prior art. One object of the present invention is to provide a heat exchanger device which has high heat exchange efficiency.

Another object of the present invention is to provide a heat exchanger device which is suitable for a wide range of uses, and which is particularly adapted to use in a domestic, hotel or commercial environment. Another object of the present invention is to provide a heat exchanger device which suffers to only a small degree from fouling and/or which is easily cleaned. Another object of the present invention is to provide a heat exchanger device which maintains high heat exchange efficiency over a long period of use. Another object of the present invention is to provide a heat exchanger device which does not require frequent maintenance operations. Another object of the present invention is to provide a heat exchanger device which is easily produced. Another object of the present invention is to provide a heat exchanger device which is inexpensive to produce, to install and to maintain.

These and other objects, which will be more fully apparent from the following description, are substantially achieved with a heat exchanger device according to the content of one or more of the appended claims, considered individually or in combination with each other, or in any combination with one or more of the further aspects described below. In a further aspect, the invention additionally relates to a heat exchanger device comprising a tubular body having substantially flat and smooth inner surfaces. In a further aspect, the invention additionally relates to a heat exchanger device in which an exchanger element extends substantially along the tubular body and along a first pathway. In a further aspect, the invention additionally relates to a heat exchanger device additionally comprising at least one deflector element couplable inside the tubular body to deflect the flow of the first liquid and to prevent it from reaching the inlet and/or the outlet of the exchanger element. In a further aspect, the invention additionally relates to a heat exchanger device in which the tubular body comprises engagement seats in which lateral walls and/or deflector elements can be mounted. In a further aspect, the invention additionally relates to a heat exchanger device in which a second liquid follows, in the heat exchanger, a second overall prevalent direction of advance from an inlet for the second liquid to an outlet for the second liquid, substantially opposite to the first prevalent direction of advance of the first liquid in the tubular body. In a further aspect, the invention additionally relates to a heat exchanger device in which the tubular body is made in a plurality of mutually couplable parts. In a further aspect, the invention additionally relates to a heat exchanger device in which the tubular body has a length in the range from 100 to 3,000 mm, or from 300 to 1500 mm, and/or a width in the range from 50 to 600 mm, or from 150 to 500 mm, or from 200 to 350 mm, and/or a height or thickness in the range from 40 mm to 200 mm, or from 50 mm to 110 mm. In a further aspect, the invention additionally relates to a heat exchanger device in which the tubular body is made of material which is thermally insulating or compatible with the waste water outlets. In a further aspect, the invention additionally relates to a heat exchanger device comprising in which the projections have a maximum height above the support and flow surface in the range from 0.5 mm to 15 mm, or from 1 mm to 10 mm, or from 2 mm to 8 mm, or from 3 mm to 6 mm. In a further aspect, the invention additionally relates to a heat exchanger device in which the exchanger element comprises a pair of plates welded together along their perimeter and in intermediate portions so as to form one or more spaces in which the second liquid flows. In a further aspect, the invention additionally relates to a heat exchanger device comprising a tubular body whose first and second connecting terminals are made of plastic material and/or of polypropylene or PVC and/or by moulding or pressure casting. In a further aspect, the invention additionally relates to a heat exchanger device in which the exchanger element defines two opposing flow surfaces for the first liquid.

In a further aspect, the invention additionally relates to a heat exchanger device in which at least the support and flow surface is coated with at least one protective film adapted to improve the corrosion resistance and/or to promote the detachment of fouling. In a further aspect, the invention additionally relates to a heat exchanger device in which the exchanger element is made of steel, preferably AISI 316L steel, or bronze, and/or is treated by electropolishing and/or by anodizing. In a further aspect, the invention additionally relates to a heat exchanger device in which at least one plate of the exchanger element is made by a "step by step" or modular moulding process, in which use is made, in alternation, of a first moulding head for making an intermediate portion, provided with the projections, of the plate or of a plurality of consecutive intermediate portions of the plate, and a second moulding head for making initial and terminal portions of the plate. In a further aspect, the invention additionally relates to a heat exchanger device in which the first liquid and the second liquid flow in the device in a parallel flow manner. In a further aspect, the invention additionally relates to a heat exchanger device in which the first liquid and the second liquid flow in the device in countercurrent. In a further aspect, the invention additionally relates to a heat exchanger device in which the tubular body is provided with an inspection opening and which additionally comprises a closure stopper which is selectively couplable to the tubular body for the selective closing of the inspection opening. In a further aspect, the invention additionally relates to a plumbing system of the domestic, residential, hotel or commercial type, comprising a device according to the invention. In a further aspect, the invention additionally relates to a plumbing system in which a device according to the invention is placed in a horizontal position, or with a small inclination with respect to the horizontal plane to promote the outflow of the waste water, and/or with the support and flow surface positioned substantially in a horizontal or inclined plane. In a further aspect, the invention additionally relates to a system in which a plurality of separate outlet pipes are operatively interconnected to flow together into a general outlet pipe operatively connected to the first inlet of the device.

A detailed description of one or more preferred embodiments of the invention is given below by way of non-limiting example, in which:

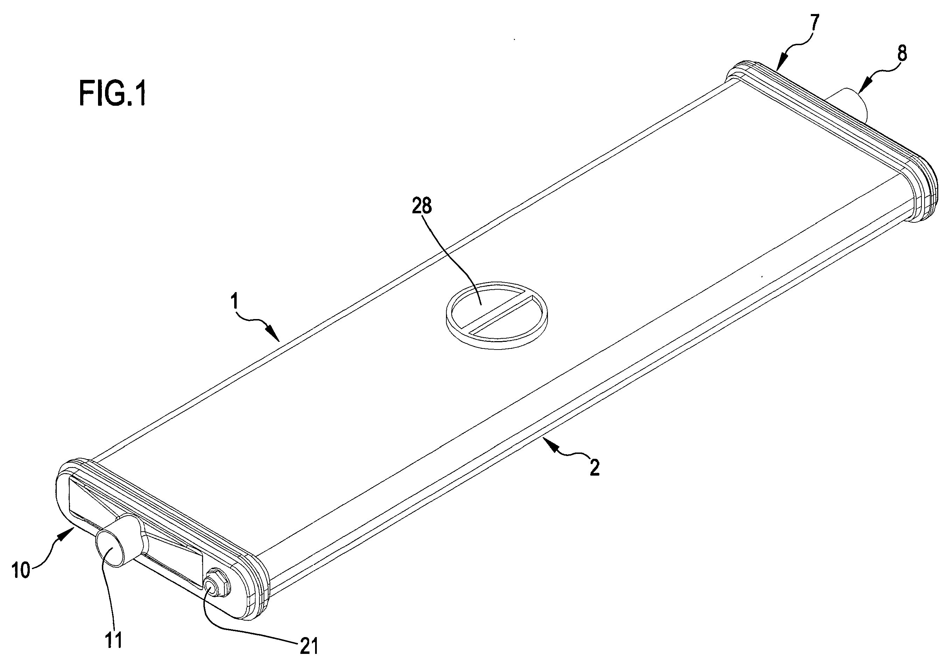

Figure 1 is a perspective view of a device according to an embodiment of the present invention;

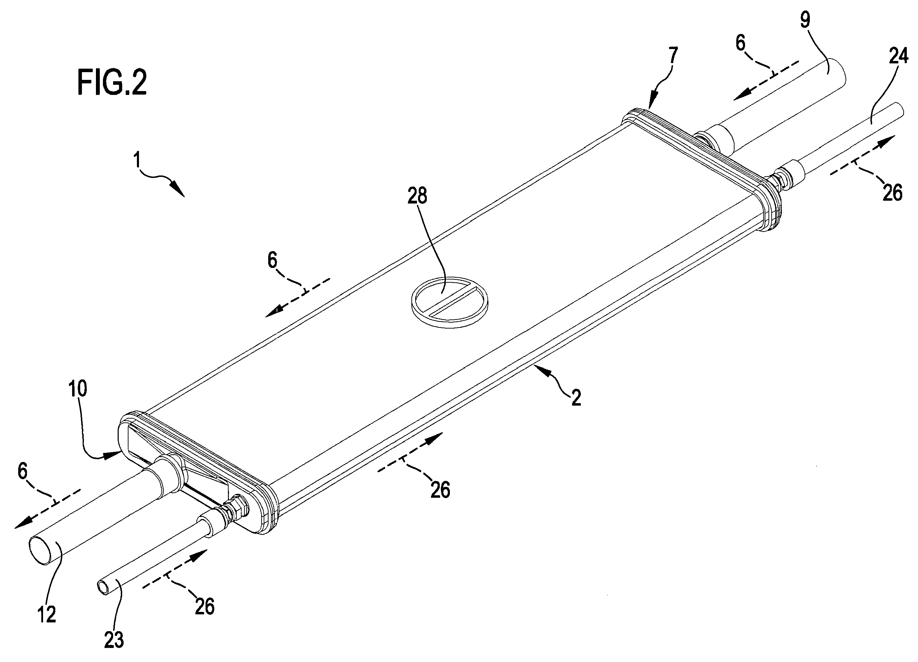

Figure 2 is a view similar to that of Figure 1 with the device connected to a number of pipes;

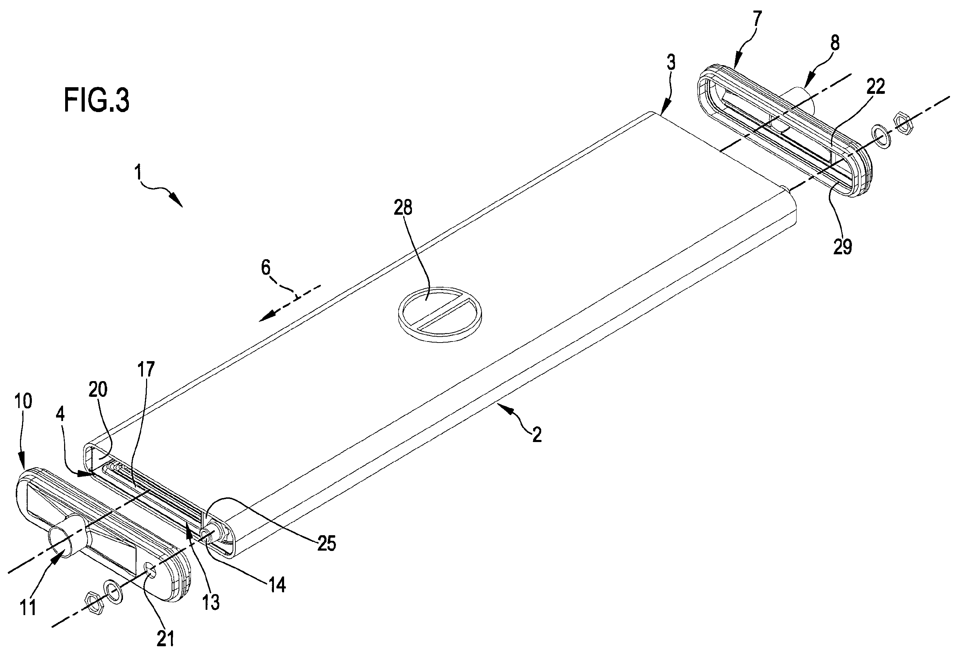

Figure 3 is a partially exploded view of the device of Figure 1;

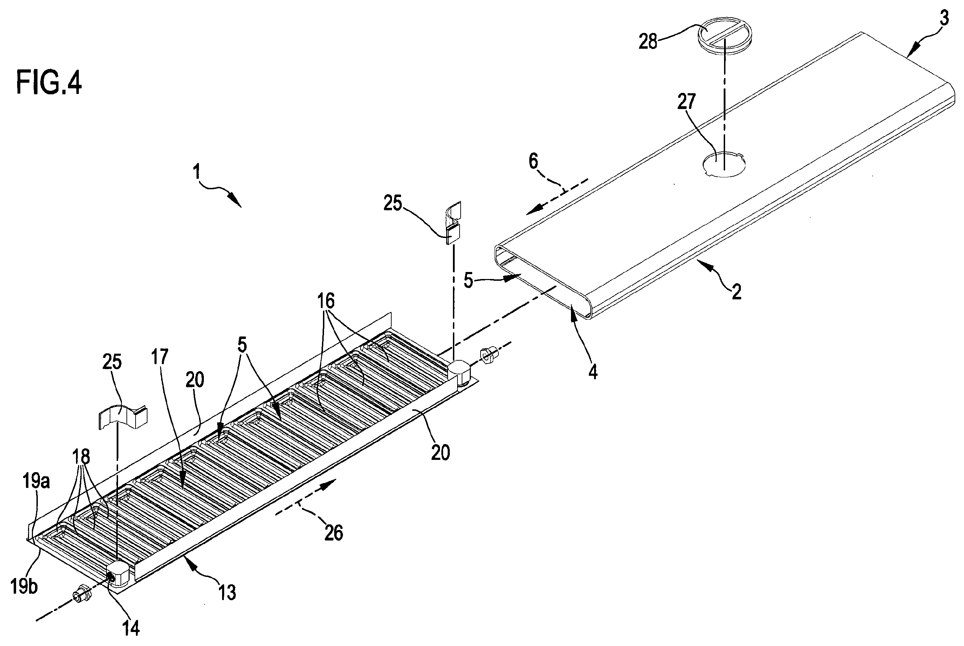

Figure 4 is a further partially exploded view of the device of Figure 1;

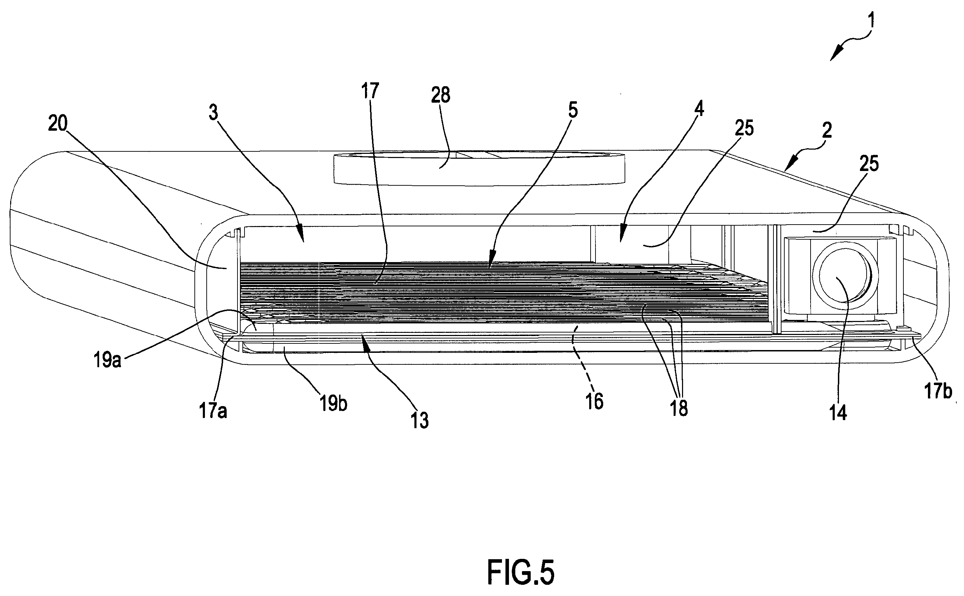

Figure 5 is a further perspective view of part of the device of Figure 1;

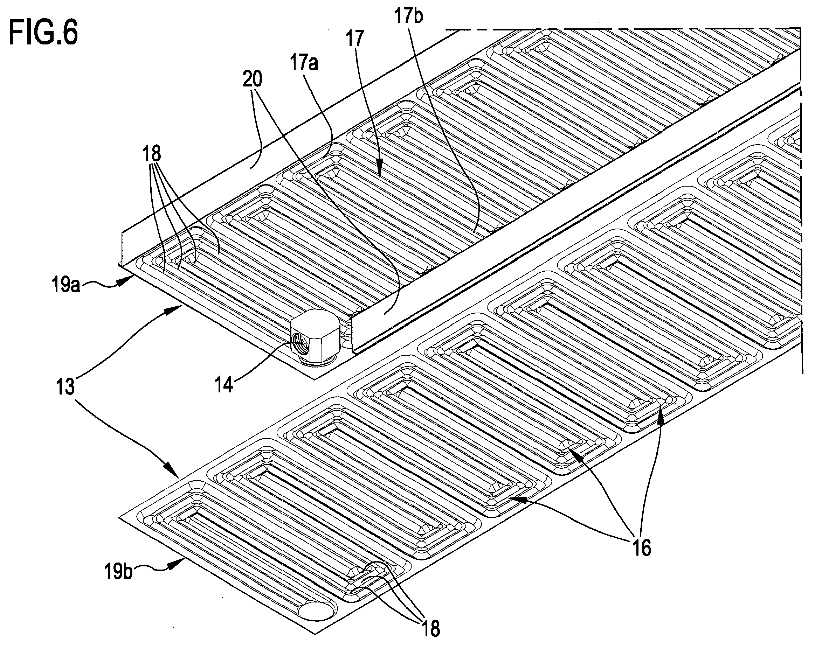

Figure 6 is a partially exploded perspective view of a detail of an exchanger element forming part of the device of Figure 1;
Figure 7 shows an example of application of the device of Figure 1, under a shower tray;
Figures 8a, 8b and 8c show schematically some examples of plumbing systems comprising the device shown in Figure 1;
Figure 9 is a view from above of the exchanger element of Figure 6;
Figure 10 is a detail of a cross section of Figure 9 taken along the lines X-X.

An exchanger device 1 according to one or more embodiments of the invention will now be described. The heat exchanger device 1 comprises a tubular body 2 having an inlet opening 3 and an outlet opening 4 and defining within itself a first pathway 5 for a first liquid according to a first prevalent direction of advance 6 from the inlet opening 3 to the outlet opening 4. The device 1 additionally comprises a first connecting terminal 7 having at least a first inlet 8 for the first liquid and being sealedly couplable to the inlet opening 3 of the tubular body 2 and further couplable, at the first inlet 8 for the first liquid, to a first outlet pipe 9 for the first liquid. The device 1 additionally comprises a second connecting terminal 10 having at least a first outlet 11 for the first liquid and being sealedly couplable, with or without the use of a sealing gasket 29, to the outlet of the tubular body 2 and further couplable, at the first outlet 11 for the first liquid, to a second outlet pipe 12 for the first liquid. The tubular body can have substantially flat and smooth inner surfaces to prevent the adhesion of fouling. The tubular body can be provided with an inspection opening 27, and the device can additionally comprise a closure stopper 28 which is selectively couplable to the tubular body for the selective closure of the inspection opening 27. The inspection opening also allows maintenance or cleaning to be carried out inside the tubular body 2. The device 1 additionally comprises an exchanger element 13 having an inlet 14 and an outlet for a second liquid and defining within itself a second pathway 16 for the second liquid, the exchanger element 13 being insertable into the tubular body 2, for example in contact with the lower base of the latter, in the first pathway 5, and being couplable to the tubular body 2, to define at least a surface 17 for the support and flow of the first liquid in the first pathway 5 inside the tubular body 2. The exchanger element extends substantially along the tubular body and/or along the first pathway. The exchanger element 13 is provided, at least on the support surface 17, with a plurality of projections 18 adapted to create turbulence in the first liquid during the flow of the first liquid across the exchanger element 13. The projections 18 extend longitudinally transversally or perpendicularly to the first prevalent direction of advance 6 of the first liquid in the first pathway 5. The exchanger element 13 can be provided, for each 10 cm of the support surface 17, with at least two projections 18, or at least three projections 18, or at least four projections 18, or at least five projections 18, or at least 6 projections 18. The exchanger element 13 can comprise a first and a second profiled plate, coupled to each other to define the second pathway 16 between them. The exchanger element 13 can comprise a pair of plates 19a, 19b welded together along their perimeter and in intermediate portions so as to form one or more spaces in which the second liquid flows. The second liquid can follow, in the heat exchanger, a second overall prevalent direction of advance, from the inlet 14 for the second liquid to the outlet 15 for the second liquid, substantially opposite to the first prevalent direction of advance 6 of the first liquid in the tubular body 2. The exchanger element 13 can comprise a first profiled plate 19a and a second profiled plate 19b, which can be identical to each other and coupled to each other, one being inverted relative to the other, to define the second pathway 16 between them. Gaskets 29 can be interposed between the plates 19a, 19b and/or between the tubular body 2 and the connecting terminals 7, 10, to provide a fluid-tight seal. The inlet 14 and the outlet 15 for the second liquid can also be formed in connectors 35 fixed to the plates 19a, 19b. The device 1 additionally comprises at least one deflector element 25 couplable inside the tubular body 2 to deflect the flow of the first liquid and to prevent it from reaching the inlet 14 and/or the outlet 15 of the exchanger element 13. In the illustrated embodiment, the deflector elements 25 deflect the flow of waste water from the connectors 35. In a variant, the exchanger element can define two opposing flow surfaces for the first liquid; in other words, the first liquid can flow in contact with two opposing surfaces. The device 1 can additionally comprise a pair of lateral walls 20, couplable in the proximity of lateral portions of the exchanger element 13, on opposite sides 17a, 17b of the support surface 17, and in the proximity of lateral portions of the tubular body 2, inside the first pathway 5, so as to define lateral containing walls for the first liquid in the first pathway 5 and channel the first liquid on the support surface 17. The tubular body additionally comprises engagement seats in which the lateral walls 20 and/or the deflector elements 25 can be mounted. The inlet 14 for the second liquid of the exchanger element 13 can be operatively connected to a second inlet 21 in the second connecting terminal 10 or in the first connecting terminal 7. The outlet 15 for the second liquid of the exchanger element 13 can be operatively connected to a second outlet 22 in the first connecting terminal 7 or in the second connecting terminal 10. The first inlet 14 and the first outlet 15 of the exchanger element 13, formed in the connectors 35, are orientated, when assembled, parallel and/or coaxially to one another and/or parallel or perpendicularly to the second inlet 21 and the second outlet 22 of the connecting terminals 7, 10. The second pathway 16 defined in the exchanger element 13 can be substantially coiled or undulating or zigzagged or transverse with respect to the first prevalent direction of advance 6 of the first liquid. The tubular body 2 can be made by extrusion. The tubular body 2 can be made in a single piece. The tubular body 2 can be made of a plastic material, for example polypropylene or PVC. The exchanger element 13 can be made of metal material. The exchanger element can be made of steel, preferably AISI 316L steel, or of bronze, and/or can be treated by electropolishing and/or by anodizing. At least the support and flow surface can be coated with at least one protective film adapted to improve the corrosion resistance and/or to promote the detachment of fouling. The first 7 and second 10 connecting terminals can be made of plastic material and/or of polypropylene or PVC and/or by moulding or pressure casting. The tubular body can have a length in the range from 100 to 3,000 mm, or from 300 to 1500 mm, and/or a width in the range from 50 to 600 mm, or from 150 to 500 mm, or from 200 to 350 mm, and/or a height or thickness in the range from 40 mm to 200 mm, or from 50 mm to 110 mm. The projections have a maximum height above the support and flow surface in the range from 0.5 mm to 15 mm, or from 1 mm to 10 mm, or from 2 mm to 8 mm, or from 3 mm to 6 mm. The invention additionally relates to a plumbing system for discharging a first liquid such as water or the like, comprising a device 1 of the type described above, having its first inlet 8 for the first liquid connected to a first outlet pipe 9 for the first liquid and a first outlet 11 for the first liquid connected to a second outlet pipe 12 for the first liquid, located downstream of the first outlet pipe 9, and further having its second inlet 21 connected to a supply pipe 23 for water to be pre-heated and the second outlet 22 connected to a delivery pipe 24 for pre-heated water.

The invention additionally relates to the use of a device 1 of the type described above, connected to outlet pipes for used hot water, as a first liquid, and to supply pipes for domestic hot water to be pre-heated before use, as a second liquid, in a domestic, residential, hotel or commercial plumbing system, downstream of wash basins, showers, bath tubs, bidets or the like. The invention additionally relates to the use of a device 1 of the type described above, integrated into a shower tray 30. A more detailed description will now be given of the embodiments illustrated in the drawings, which show an exchanger with a single or double exchange surface, made by joining two plates 19a, 19b of sheet metal or two sheets of other material shaped to form, when joined together, a second obligatory pathway 16 for the clean feedwater (the second liquid). Both of the exchange surfaces, or only one of them, may be in contact with the flow of waste water, depending on the type of conduit in which the exchanger is incorporated.

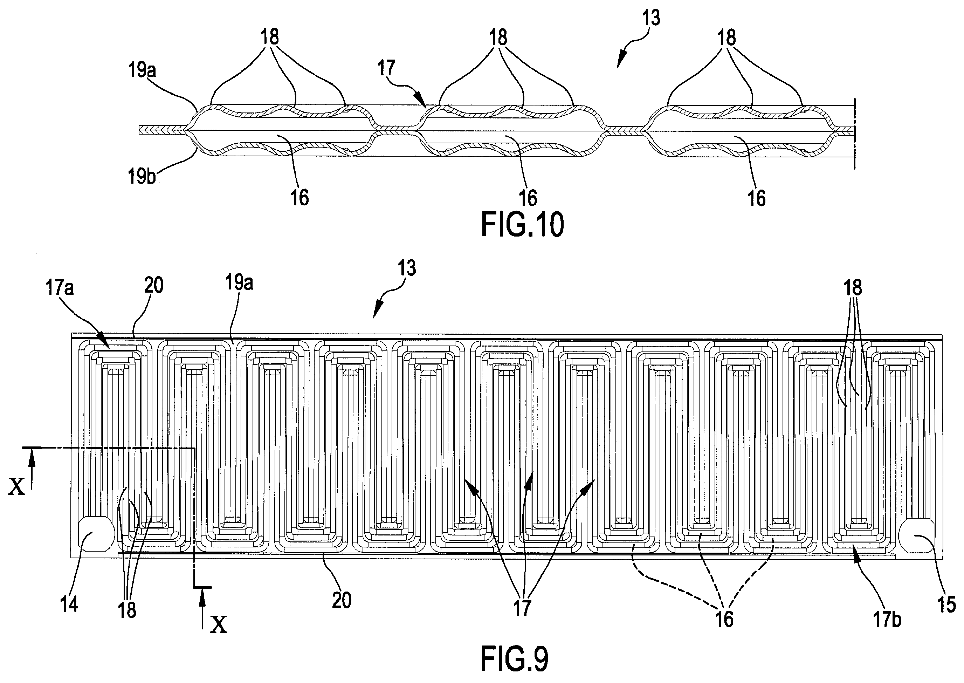

With express reference to Figure 10, it can be seen that the channels forming the pathway 16 for the clean water have a tubular section which is strongly flattened in the plane of maximum extension of the exchanger element, with main walls corrugated transversely to the channels to form an alternation of contiguous projections 18 and valleys 18' in a sinuous connected arrangement which facilitates the flow of the fouling to prevent its accumulation.

The cross section of the individual inner channels through which the clean water passes, determined by this profiling, advantageously has projections of very limited height, in order not to create problems for the flow of the waste water across the outer surface or surfaces. At the same time, the passage cross section is sufficient for a correct flow of water without causing excessive pressure drops which could seriously reduce the flow. The waste water flowing across the outer surface or surfaces creates a layer which is moved by the profiling of the sheets, advantageously creating a continuous variation of the laminar layer with consequent improvement of the heat exchange. The clean water flowing inside the two plates 19a, 19b, in the spaces formed by the profiling of the sheets, is also correctly moved in such a way that the boundary layer is constantly broken, thus advantageously promoting the exchange of heat. The first pathway 5 of the clean water, formed between the two plates 19a, 19b, is relatively long because of a pathway which can have different shapes, including that of a continuous coil. For example, the waste water can flow in the opposite direction (in countercurrent) to the clean water located inside the exchanger. The outer surfaces of the exchanger element 13 essentially consist of gently undulating walls which present no obstacles to the outflow of the solid elements contained in the ordinary waste water. The advantages of this solution are multiple. In particular, no obstructions of any kind are created to the flow of the waste water, even if the water contains foreign bodies. The exchanger element 13 can be contained in a suitable conduit of any shape or size suitable for conveying the flow of waste water. It is also possible to incline the exchanger device 1 at different angles to the horizontal plane. It is also possible to position the exchanger device 1 with its axis vertical to further improve the flow of the waste water. The two profiled panels, metal sheets or other sheets can be joined by welding or mechanical fastening or by means of special adhesives. The watertightness of the space enclosed between the two plates 19a, 19b is advantageously achieved by welding or by other fastening around the perimeter. In the intermediate portions where the two metal sheets or sheets of other material are joined between one space and next, welds or other mechanical fastenings are provided in order to ensure watertightness at the pressures of the plumbing circuits. The two plates 19a, 19b can have identical outer profiles to prevent the internal pressure from deforming the profile of the longitudinal section of the exchanger as a result of difference in the mechanical stresses. The shape of the exchanger element 13 proposed by the present invention is such that optimal watertightness is created at the pressure exerted by the clean water flowing between the two profiled plates or sheets. This is because, although a very large thermal contact surface is provided between the two fluids, the pressure exerted by the mains water which can reach very high levels is directed solely into the individual channels of the space which are joined at their sides where the two metal sheets or sheets of other material are joined. In particular, these joints are made on both sides of each channel and around the whole outer perimeter of the two sheets. This advantageous solution avoids dangerous deformations of the exchanger element 13 even if the pressure of the water present in this element reaches a very high level (up to 10 bars, for example). The inlet and outlet of the clean water to and from the space inside the exchanger element 13 is permitted by two suitable connectors 35 welded to one of the two profiled metal sheets or sheets of other material. These connectors 35 have an attachment designed to enable the ordinary pipes for the supply of mains water to be easily connected. The two profiled panels or sheets can be made of many materials, including especially corrosion-resistant stainless steel, copper, brass, and the like. The two outer surfaces can also be made from sheets of materials formed by thermoplastic resins which can be welded by various known methods such as ultrasonic, microvibration and other methods. As in the case of metal sheets, profiled thermoplastic resin sheets can be joined by special adhesives or mechanical fastenings with or without the use of intermediate gaskets. In order to prevent subsequent corrosion phenomena it is possible to provide external protective coatings of the surfaces in contact with waste water. The cleaning and maintenance operation for the exchanger device 1 proposed by the present invention is advantageously similar to those performed on ordinary outlet systems composed of cylindrical pipes.

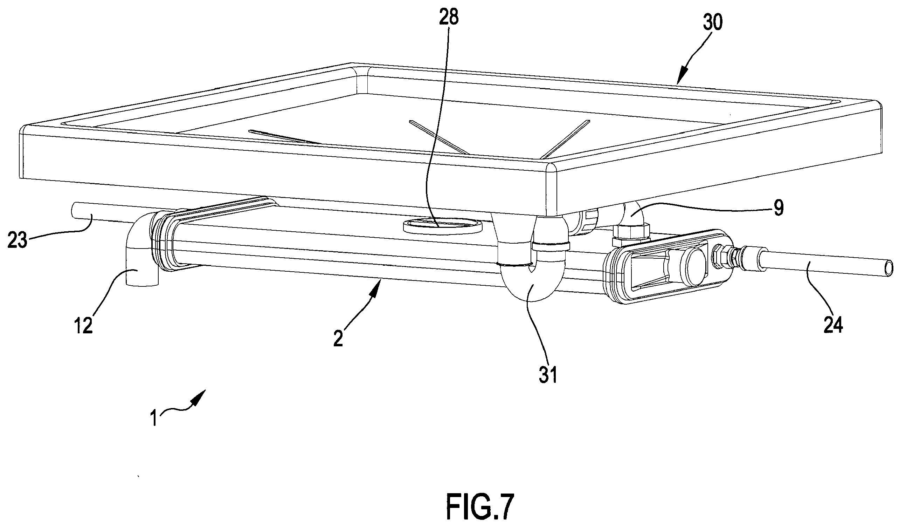

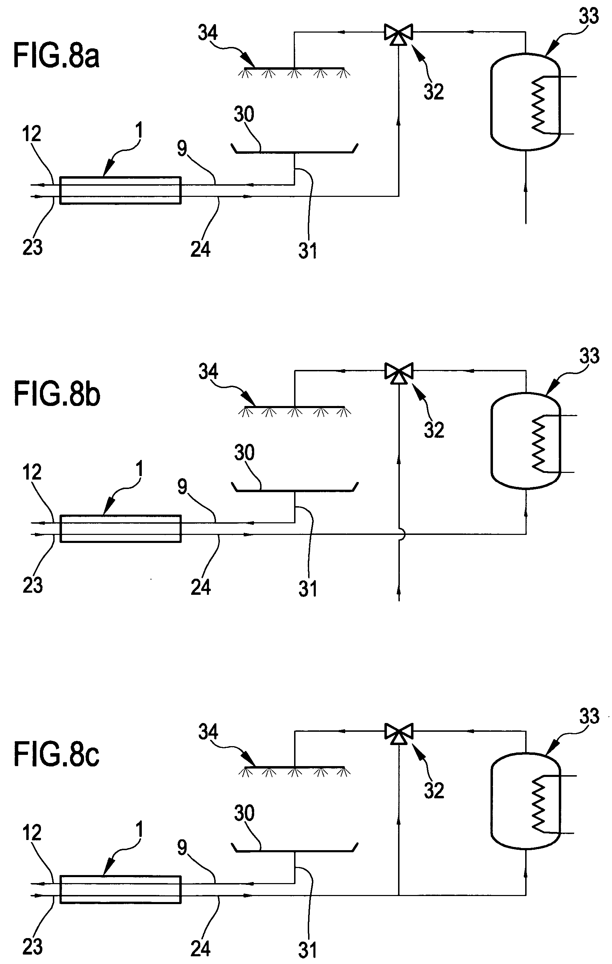

The heat exchange is optimal because of the perfect countercurrent movement between the two fluids and because of the specific geometry which helps to break the boundary layers of the two water flows, thus creating turbulent motion which considerably increases the heat exchange coefficient. The geometrical configuration of the inner spaces and of the resulting outer surface can be created in various shapes adapted to ensure the best balance between the generation of turbulent motion to promote the heat exchange between the two flows and the absence of friction which would impede the correct outflow of both the waste water and the clean mains water. The outer dimensions and proportions of the exchanger device 1 proposed by the present invention can vary, essentially according to the flow rates of the waste water and of the mains water, and the dimensions of the conduits in which the exchanger device 1 is to be located. The operation of the device 1 proposed by the present invention is described below, partially with reference to the appended drawings. The clean water from the mains (from a municipal water supply, from a well with a pressurized pump, or the like) passes through the first connecting terminal 7, and in particular through the inlet 14 for the second liquid, into the space of the exchanger element 13, which it flows through until it reaches the outlet 15 for the second liquid and the second outlet connecting terminal 10. The waste water flows into the first pathway 5 defined in the tubular body 2 and contacts the surface of the exchanger element 13, flowing in countercurrent to the flow of the mains water. In the example shown in Figure 7, the device 1 is installed under a shower tray 30. In this variant, the device 1 can have a second inlet for the first liquid, for reasons of geometry, for example an inlet made directly in the tubular body 2 as shown. In this case, the first inlet is closed with a suitable stopper, as shown in the drawing, and the second inlet for the first liquid is connected to a siphon outlet 31 of the shower 34. In order to provide a fuller description, some technical details of the operating principles of an exchanger device 1 according to the invention are given below. The characteristic quantity which generally defines the performance of a heat exchanger is the total thermal transmittance, which is the product of the total heat exchange coefficient K, expressed in W/(m$^2$K), and the area of the exchange surface A, expressed in m$^2$. The characteristic parameter of a heat exchanger is the product KA, rather than the individual values of K and A, which are conventional; this is because the area of the exchange surface can be the internal or the external area, or can be defined by any other convention. The total coefficient K depends on the flow rates of the treated fluids and their operating conditions. However, in order to apply the elementary theory of heat exchangers to a practical case, the coefficient K must be assumed to be virtually uniform over the whole surface of the exchanger: it is only on this assumption that the mean logarithmic temperature difference can be used as a potential motor of the heat exchange process, or that the concept of thermal efficiency can be used to determine the heat flows exchanged. In the specific case of a water/water exchanger, the coefficient of exchange K can be considered uniform over the whole of the exchanger, with low dependence on temperature, and therefore the transmittance KA can be considered to be a value characterizing the exchanger and purely a function of the flow rates concerned. Another index more directly connected with the performance of an exchanger is the thermal efficiency ε, defined as the ratio between the thermal flow actually exchanged and the maximum theoretically exchangeable flow when the thermal transmittance tends to infinity. When ε is known, the exchanged flow q is then found by the following formula: $q = \varepsilon(ni\ c)_{min}(t_i' - t_i'')$ where the temperature difference ($t_i'$ - ti") represents the difference between the inlet temperatures of the two fluids; this is justified by considering that, in the hypothetical case of infinite transmittance, the current with the lower thermal flow capacity is brought to thermal equilibrium at the outlet of the exchanger with the temperature of the other incoming current. In order to quantify the energy saving that can be obtained with a recovery exchanger, it should be borne in mind that it depends primarily on the efficiency of the exchanger, but not only on this quantity, since there are different installation systems offering different potential energy savings, depending on the operating conditions. There are at least three different possible arrangements of the exchanger device 1 for recovery, illustrated in Figures 8a, 8b and 8c, where, for simplicity of representation, the users are shown schematically as a single shower 34, although it is possible to have more than one user.

Figure 8a: The mains water leaving the exchanger is mixed, for example by means of a three-way valve 32, with the hot water from a water heater 33 in order to regulate the temperature of use. This system is suitable for the recovery of thermal power from a single user (a typical case being that of a shower), and in this case the temperature of the "cold" domestic water supply does not change; if the system is used at the inlet or outlet of a domestic water supply system it has the disadvantage that, in limited periods during which hot water is drawn, the "cold" domestic water supply system supplies more or less tepid water.

Figure 8b: The mains water leaving the exchanger is introduced into the water heater 33; the temperature of the water at the user is regulated by mixing with cold water from the mains. This is the case with a typical centralized recovery system when it is desirable not to change the temperature of the "cold" supply system in any circumstances.

Figure 8c: The mains water leaving the exchanger is sent to the mixer and to the water heater 33. This arrangement provides the maximum energy saving, but leads to the disadvantage identified in a), when used in a centralized installation (the "cold" supply system can supply tepid water at certain times).

The energy saving that can be achieved with these systems can be evaluated by relating it to the value $\varepsilon$ which represents the efficiency of the recovery exchanger. The fundamental equations and symbols used to evaluate heat exchange are shown below:

$t_{r,i}/t_{r,u}$: temperature of the mains water at the inlet/outlet of the exchanger ($t_{r,i}$ represents the temperature of the water as it is drawn from the mains)

$t_{b,1}/t_{b,2}$: temperature of the water at the inlet/outlet of the water heater

$t_u$: temperature of the water at the user

$\varepsilon$ : efficiency of the heat exchanger used for energy recovery

$R_e$: percentage energy saving achieved by means of the heat recovery.

The temperature $t_{r,u}$ of the mains water leaving the recovery exchanger is given by the following formula (note that the mains water is always the current with the smaller flow thermal capacity):

$$t_{r,u} = t_{r,i} + \varepsilon\,(t_u - t_{r,i}) \tag{1}$$

It is possible to define a mixing ratio ($R_m = m_2/m_3$) between the flow rate of cold water sent to the mixer and the flow rate of water sent to the user. We find:

$$R_m = m_2/m_3 = (t_{2b} - t_u)/(t_{2b} - t_{r,u}) \qquad \text{(Figures 8a and 8c)} \tag{2}$$

$$R_m = m_2/m_3 = (t_{2b} - t_u)/(t_{2b} - t_{r,i}) \qquad \text{(Figure 8b)} \tag{2'}$$

The ratio $m_1/m_3$ between the flow rate of water drawn from the water heater and that sent to the user is:

$$m_1/m_3 = 1 - R_m \tag{3}$$

Calculation of the energy saving $R_e$:

Figure 8a) The water heater heats water from the temperature $t_{r,i}$ to the temperature $t_{2h}$, these temperatures remaining unchanged, and therefore the energy consumption is proportional to the ratio $m_1/m_3 = (1 - R_m)$, which in turn is a function of $\varepsilon$ for predetermined boundary conditions ($t_{r,i}$, $t_u$, $t_{2b}$). The percentage energy saving $R_e$ is therefore:

$$R_e = \frac{(m_1/m_3)_{\varepsilon=0} - (m_1/\dot{m}_3)_{\varepsilon}}{(m_1/m_3)_{\varepsilon=0}}$$

Figure 8b) In this case, the mixing ratio $R_m = m_2/m_3$ does not vary, and therefore the ratio $m_1/m_3$ does not vary either; consequently the energy consumption is proportional to the temperature difference ($t_{2b} - t_{1b}$) between the outlet and the inlet of the water heater. The percentage energy saving $R_e$ is therefore:

$$R_e = \frac{\left(t_{2b} - t_{r,i}\right) - \left(t_{2b} - t_{r,u}\right)}{\left(t_{2b} - t_{r,i}\right)}$$

where $t_{r,u}$ is calculated by the formula (1) and is a function of $\varepsilon$.

Figure 8c) The flow rates in the two branches of the recovery exchanger are identical and are equal to $m_3$. The basic consumption $q_b$ (without the recovery exchanger) is:

$$q_b = m_3 \, (t_u - t_{r,i})$$

The energy saving $\Delta e$ is identical to the flow exchanged in the recovery exchanger:

$$\Delta e = m_3 \, (t_{r,u} - t_{r,i}) = m_3 \, \varepsilon \, (t_u - t_{r,i})$$

The percentage energy saving is $\Delta e/q_b$, and therefore: $R_e = \varepsilon$

The present invention enables one or more of the problems encountered in the prior art to be resolved and provides one or more of the following benefits. In the first place, the invention can provide a heat exchanger device which has a high heat exchange efficiency which is maintained substantially unaltered over time. Furthermore, a heat exchanger device according to the invention can be used in numerous fields of application, in domestic, hotel, commercial, industrial and other settings. The invention can also provide a heat exchanger device which is resistant to fouling and is easy to clean. Moreover, a device according to the invention does not require frequent maintenance operations and is simple to produce. A device according to the invention is also inexpensive to produce, install and maintain.

**Claims**

1.  A heat exchanger device, comprising:

    a tubular body (2) having an inlet opening (3) and an outlet opening (4) and defining within itself a first pathway (5) for a first liquid according to a first prevalent direction of advance (6) from the inlet opening (3) to the outlet opening (4);
    a first connecting terminal (7) having at least a first inlet (8) for the first liquid and being sealedly couplable to the inlet opening (3) of the tubular body (2) and further couplable, at the first inlet (8) for the first liquid, to a first outlet pipe (9) for the first liquid;
    a second connecting terminal (10) having at least a first outlet (11) for the first liquid and being sealedly couplable to the outlet of the tubular body (2) and further couplable, at the first outlet (11) for the first liquid, to a second outlet pipe (12) for the first liquid; and
    an exchanger element (13) having an inlet (14) and an outlet (15) for a second liquid and defining within itself a second pathway (16) for the second liquid, the exchanger element (13) being insertable in the tubular body (2) in the first pathway (5) and being couplable to the tubular body (2) so as to define at least a surface (17) for the support and flow of the first liquid in the first pathway (5) inside the tubular body (2), **characterised in that** the second pathway of the exchange element includes channels having a strongly flattened tubular section with main walls corrugated transversely to the channels to form alternating contiguous projections and valleys.

2.  A device according to Claim 1, wherein the exchanger element (13) is provided, at least at the support surface (17), with a plurality of projections (18) adapted to cause turbulence in the first liquid during the flow of the first liquid across the exchanger element (13).

3.  A device according to the preceding claim, wherein the projections (18) extend longitudinally transversally or perpendicularly to the first prevalent direction of advance (6) of the first liquid in the first pathway (5) and/or wherein the exchanger element (13) is provided, for each 10 cm of the support surface (17), with at least two of the projections (18), or at least three of the projections (18), or at least four of the projections (18), or at least five of the projections (18), or at least 6 of the projections (18).

4. A device according to any one of the preceding claims, wherein the exchanger element (13) comprises a first and a second profiled plate, coupled to each other so as to define the second pathway (16) between them and/or wherein the exchanger element (13) comprises a first and a second profiled plate which are identical to each other and coupled to each other, one being tilted with respect to another, so as to define the second pathway (16) between them.

5. A device according to any one of the preceding claims, further comprising a pair of lateral walls (20), couplable in the proximity of lateral portions of the exchanger element (13), on opposite sides of the support surface (17), and in the proximity of lateral portions of the tubular body (2), inside the first pathway (5), so as to define lateral containing walls for the first liquid in the first pathway (5) and channel the first liquid on the support surface (17).

6. A device according to any one of the preceding claims, wherein the inlet of the exchanger element (13) is operatively connected to a second inlet in the second connecting terminal (10) and/or in the first connecting terminal (7) and wherein the outlet of the exchanger element (13) is operatively connected to a second outlet in the first connecting terminal (7) and/or in the second connecting terminal (10) and/or wherein the first inlet and the first outlet of the exchanger element (13), formed in the connecting elements, are orientated, when assembled, parallel and/or coaxially to one another and/or parallel or perpendicularly to the second inlet and the second outlet.

7. A device according to Claim 1, wherein the second pathway (16) defined in the exchanger element (13) is substantially coiled or undulating or zigzagged or transverse with respect to the first prevalent direction of advance (6) of the first liquid.

8. A device according to any one of the preceding claims, wherein the tubular body (2) is made by means of extrusion and/or in a single piece and/or of a plastic material and/or of polypropylene or PVC, and/or wherein the exchanger element (13) is made of a metal material.

9. A plumbing system for discharging a first liquid such as water or the like, comprising a device (1) as in any one of the preceding claims, having its first inlet connected to a first outlet pipe (9) for the first liquid and a first outlet connected to a second outlet pipe (12) for the first liquid, located downstream of the first outlet pipe (9), and further having its second inlet connected to a supply pipe (23) for water to be pre-heated and the second outlet connected to a delivery pipe (24) for pre-heated water.

10. Use of a device (1) according to any one of Claims 1 to 8, connected to outlet pipes for used hot water, as a first liquid, and to supply pipes for water to be used, as a second liquid, in a domestic, residential, hotel or commercial plumbing system, downstream of wash basins, showers, bath tubs, bidets or the like, and/or use of a device (1) according to any one of Claims 1 to 8, integrated into a shower tray.

**Patentansprüche**

1. Wärmetauschervorrichtung, umfassend:

- einen rohrförmigen Körper (2) mit einer Einlassöffnung (3) und einer Auslassöffnung (4) und der in sich selbst einen ersten Durchgang (5) für eine erste Flüssigkeit gemäß einer ersten vorherrschenden Vorschubrichtung (6) von der Einlassöffnung (3) zur Auslassöffnung (4) bildet;
- einen ersten Verbindungsanschluss (7) mit zumindest einem ersten Einlass (8) für die erste Flüssigkeit und der abdichtend mit der Einlassöffnung (3) des rohrförmigen Körpers (2) koppelbar ist und ferner am ersten Einlass (8) für die erste Flüssigkeit mit einer ersten Auslassleitung (9) für die erste Flüssigkeit koppelbar ist;
- einen zweiten Verbindungsanschluss (10) mit zumindest einem ersten Auslass (11) für die erste Flüssigkeit und der abdichtend mit dem Auslass des rohrförmigen Körpers (2) koppelbar ist und ferner am ersten Auslass (11) für die erste Flüssigkeit mit einer zweiten Auslassleitung (12) für die erste Flüssigkeit koppelbar ist; und
- ein Wärmetauscherelement (13) mit einem Einlass (14) und einem Auslass (15) für eine zweite Flüssigkeit und das in sich selbst einen zweiten Durchgang (16) für die zweite Flüssigkeit bildet, wobei das Wärmetauscherelement (13) in den rohrförmigen Körper (2) im ersten Durchgang (5) einsetzbar und mit dem rohrförmigen Körper (2) koppelbar ist, um so zumindest eine Fläche (17) zum Abstützen und Strömen der ersten Flüssigkeit im ersten Durchgang (5) innerhalb des rohrförmigen Körpers (2) zu bilden,
- **dadurch gekennzeichnet, dass** der zweite Durchgang des Wärmetauscherelements Kanäle mit einem stark abgeflachten rohrförmigen Bereich mit Hauptwänden umfasst, die quer zu den Kanälen gewellt sind, um abwechselnd zusammenhängende Vorsprünge und Täler zu bilden.

**2.** Vorrichtung gemäß Anspruch 1, wobei das Wärmetauscherelement (13) zumindest an der Abstützfläche (17) mit einer Mehrzahl von Vorsprüngen (18) versehen ist, die angepasst sind, um eine Turbulenz in der ersten Flüssigkeit während des Strömens der ersten Flüssigkeit über das Wärmetauscherelement (13) zu bewirken.

**3.** Vorrichtung gemäß dem vorhergehenden Anspruch, wobei sich die Vorsprünge (18) in Längsrichtung quer oder senkrecht zur ersten vorherrschenden Vorschubrichtung (6) der ersten Flüssigkeit im ersten Durchgang (5) erstrecken, und/oder wobei das Wärmetauscherelement (13) für jeweils zehn Zentimeter der Abstützfläche (17) mit zumindest zwei der Vorsprünge (18) oder zumindest drei der Vorsprünge (18) oder zumindest vier der Vorsprünge (18) oder zumindest fünf der Vorsprünge (18) oder zumindest sechs der Vorsprünge (18) vorgesehen ist.

**4.** Vorrichtung gemäß einem der vorhergehenden Ansprüche, wobei das Wärmetauscherelement (13) eine erste und eine zweite Profilplatte aufweist, die miteinander gekoppelt sind, um so den zweiten Durchgang (16) zwischen ihnen zu bilden, und/oder wobei das Wärmetauscherelement (13) eine erste und eine zweite Profilplatte aufweist, die identisch und miteinander gekoppelt sind, wobei eine bezüglich der anderen geneigt ist, um so den zweiten Durchgang (16) zwischen ihnen zu bilden.

**5.** Vorrichtung gemäß einem der vorhergehenden Ansprüche, die ferner ein Paar von seitlichen Wänden (20), die in der Nähe von seitlichen Bereichen des Wärmetauscherelements (13) verbindbar sind, auf gegenüberliegenden Seiten der Abstützfläche (17) und in der Nähe von seitlichen Bereichen des rohrförmigen Körpers (2) innerhalb des ersten Durchgangs (5) aufweist, um so seitliche Aufnahmewände für die erste Flüssigkeit im ersten Durchgang (5) zu bilden und die erste Flüssigkeit auf die Abstützfläche (17) zu leiten.

**6.** Vorrichtung gemäß einem der vorhergehenden Ansprüche, wobei der Einlass des Wärmetauscherelements (13) mit einem zweiten Einlass im zweiten Verbindungsanschluss (10) und/oder im ersten Verbindungsanschluss (7) wirksam verbunden ist, und wobei der Auslass des Wärmetauscherelements (13) mit einem zweiten Auslass im ersten Verbindungsanschluss (7) und/oder im zweiten Verbindungsanschluss (10) wirksam verbunden ist, und/oder wobei der erste Einlass und der erste Auslass des Wärmetauscherelements (13), die in den Verbindungselementen ausgebildet sind, beim Montieren parallel und/oder koaxial zueinander und/oder parallel oder senkrecht zum zweiten Einlass und zum zweiten Auslass ausgerichtet sind.

**7.** Vorrichtung gemäß Anspruch 1, wobei der zweite Durchgang (16), der im Wärmetauscherelement (13) ausgebildet ist, bezüglich der ersten vorherrschenden Vorschubrichtung (6) der ersten Flüssigkeit im Wesentlichen gewunden oder wellenförmig oder zickzackförmig oder querförmig ist.

**8.** Vorrichtung gemäß einem der vorhergehenden Ansprüche, wobei der rohrförmige Körper (2) durch Extrusion und/oder in einem einzigen Stück und/oder aus Kunststoff und/oder Polypropylen oder PVC hergestellt ist, und/oder wobei das Wärmetauscherelement (13) aus einem Metallmaterial hergestellt ist.

**9.** Rohrleitungssystem zum Ablassen einer ersten Flüssigkeit wie Wasser oder dergleichen, das eine Vorrichtung (1) gemäß einem der vorhergehenden Ansprüche aufweist, die einen ersten Einlass, der mit einer ersten Auslassleitung (9) für die erste Flüssigkeit verbunden ist, und einen ersten Auslass aufweist, der mit einer zweiten Auslassleitung (12) für die erste Flüssigkeit verbunden ist, die stromabwärts von der ersten Auslassleitung (9) angeordnet ist, und ferner einen zweiten Einlass, der mit einer Zuführleitung (23) für vorzuwärmendes Wasser verbunden ist, und den zweiten Auslass aufweist, der mit einer Förderpumpe (24) für vorgewärmtes Wasser verbunden ist.

**10.** Verwendung einer Vorrichtung (1) gemäß einem der Ansprüche 1 bis 8, die mit Auslassleitungen für gebrauchtes heißes Wasser als erste Flüssigkeit und mit Zuführleitungen für zu verwendendes Wasser als zweite Flüssigkeit in einem Haus-, Wohn-, Hotel- oder Geschäftsgebäude-Rohrleitungssystem, stromabwärts von Waschbecken, Duschen, Badewannen, Bidets oder dergleichen, verbunden ist, und/oder Verwendung einer Vorrichtung (1) gemäß einem der Ansprüche 1 bis 8, die in einer Duschwanne integriert ist.

**Revendications**

**1.** Dispositif échangeur thermique comprenant :

un corps tubulaire (2) ayant une lumière d'entrée (3) et une lumière de sortie (4) et définissant, à l'intérieur de lui-même, une première voie de passage (5) pour un premier liquide selon une première direction prévalente d'avance (6) de la lumière d'entrée (3) à la lumière de sortie (4) ;

une première borne de connexion (7) ayant au moins un premier orifice d'entrée (8) pour le premier liquide et pouvant être couplée de façon hermétique à la lumière d'entrée (3) du corps tubulaire (2), et pouvant être couplée en outre, au premier orifice d'entrée (8) pour le premier liquide, à une première tubulure de sortie (9) pour le premier liquide ;

une seconde borne de connexion (10) ayant au moins un premier orifice de sortie (11) pour le premier liquide et pouvant être couplée de façon hermétique à l'orifice de sortie du corps tubulaire (2), et pouvant être couplée en outre, au premier orifice de sortie (11) pour le premier liquide, à une seconde tubulure de sortie (12) pour le premier liquide ; et

un élément échangeur (13) ayant un orifice d'entrée (14) et un orifice de sortie (15) pour un second liquide et définissant, à l'intérieur de lui-même, une seconde voie de passage (16) pour le second liquide, l'élément échangeur (13) pouvant être inséré dans le corps tubulaire (2) dans la première voie de passage (5) et pouvant être couplé au corps tubulaire (2) de sorte à définir au moins une surface (17) pour le support et l'écoulement du premier liquide dans la première voie de passage (5) à l'intérieur du corps tubulaire (2), **caractérisé en ce que** la seconde voie de passage de l'élément échangeur contient des canaux ayant une section tubulaire fortement aplatie avec des parois principales ondulées transversalement par rapport aux canaux pour former des protubérances et des vallées contiguës alternantes.

2. Dispositif selon la revendication 1, dans lequel l'élément échangeur (13) est doté, au moins à la surface de support (17), d'une pluralité de protubérances (18) adaptée pour provoquer des turbulences dans le premier liquide durant l'écoulement du premier liquide à travers l'élément échangeur (13).

3. Dispositif selon la revendication précédente, dans lequel les protubérances (18) s'étendent longitudinalement, transversalement ou perpendiculairement à la première direction prévalente d'avance (6) du premier liquide dans la première voie de passage (5) et/ou dans lequel l'élément échangeur (13) est doté, tous les 10 cm de la surface de support (17), d'au moins deux des protubérances (18), ou d'au moins trois des protubérances (18), ou d'au moins quatre des protubérances (18), ou d'au moins cinq des protubérances (18), ou d'au moins six des protubérances (18).

4. Dispositif selon l'une quelconque des revendications précédentes, dans lequel l'élément échangeur (13) comprend une première et une seconde plaque profilée, couplées l'une à l'autre de sorte à définir la seconde voie de passage (16) entre elles et/ou dans lequel l'élément échangeur (13) comprend une première et une seconde plaque profilée qui sont identiques l'une à l'autre et couplées l'une à l'autre, l'une étant inclinée par rapport à l'autre, de sorte à définir la seconde voie de passage (16) entre elles.

5. Dispositif selon l'une quelconque des revendications précédentes, comprenant en outre une paire de parois latérales (20), pouvant être couplée dans la proximité de portions latérales de l'élément échangeur (13), sur des côtés opposés de la surface de support (17), et dans la proximité de portions latérales du corps tubulaire (2), à l'intérieur de la première voie de passage (5), de sorte à définir des parois de confinement latérales pour le premier liquide dans la première voie de passage (5) et canaliser le premier liquide sur la surface de support (17).

6. Dispositif selon l'une quelconque des revendications précédentes, dans lequel l'orifice d'entrée de l'élément échangeur (13) est connecté fonctionnellement à un second orifice d'entrée dans la seconde borne de connexion (10) et/ou dans la première borne de connexion (7), et dans lequel l'orifice de sortie de l'élément échangeur (13) est connecté fonctionnellement à un second orifice d'entrée dans la première borne de connexion (7) et/ou dans la seconde borne de connexion (10) et/ou dans lequel le premier orifice d'entrée et le premier orifice de sortie de l'élément échangeur (13), formés dans les éléments de connexion, sont orientés, lorsqu'ils sont assemblés, parallèlement et/ou coaxialement l'un par rapport à l'autre et/ou parallèlement et/ou perpendiculairement au second orifice d'entrée et au second orifice de sortie.

7. Dispositif selon la revendication 1, dans lequel la seconde voie de passage (16) définie dans l'élément échangeur (13) est sensiblement spiralée ou ondulante ou zigzagante ou transversale par rapport à la première direction prévalente d'avance (6) du premier liquide.

8. Dispositif selon l'une quelconque des revendications précédentes, dans lequel le corps tubulaire (2) est fait au moyen d'une extrusion et/ou d'un seul tenant et/ou d'une matière plastique et/ou de polypropylène ou PVC, et/ou dans lequel l'élément échangeur (13) est fait en un matériau métallique.

9. Système de plomberie pour évacuer un premier liquide, de l'eau par exemple ou similaire, comprenant un dispositif (1) selon l'une quelconque des revendications précédentes, ayant son premier orifice d'entrée connecté à une première tubulure de sortie (9) pour le premier liquide et un premier orifice de sortie connecté à une seconde tubulure de sortie (12) pour le premier liquide, situé en aval de la première tubulure de sortie (9), et ayant en outre son second orifice d'entrée connecté à une tubulure d'alimentation (23) pour de l'eau devant être préchauffée et le second orifice de sortie connecté à une tubulure de distribution (24) pour de l'eau préchauffée.

10. Utilisation d'un dispositif (1) selon l'une quelconque des revendications 1 à 8, connecté à des tubulures de sortie pour de l'eau chaude usée, en tant qu'un premier liquide, et à des tubulures d'alimentation pour de l'eau devant être utilisée, en tant qu'un second liquide, dans un système de plomberie domestique, résidentiel, hôtelier ou commercial, en amont de lavabos, douches, baignoires, bidets ou similaires, et/ou utilisation d'un dispositif (1) selon l'une quelconque des revendications 1 à 8, intégré dans un bac à douche.

FIG.1

EP 2 689 206 B1

FIG.2

EP 2 689 206 B1

FIG.3

FIG.4

EP 2 689 206 B1

FIG.5

FIG.6

FIG.7

EP 2 689 206 B1

FIG.8a

FIG.8b

FIG.8c

FIG.10

FIG.9

EP 2 689 206 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100024080 A
- GB 2416829 A
- US 2010258062 A